# EUROPÄISCHE PATENTSCHRIFT

(11) **EP 3 102 920 B1**
(45) Veröffentlichungstag und Bekanntmachung des Hinweises auf die Patenterteilung: **17.10.2018**
(21) Anmeldenummer: 15704713.5
(22) Anmeldetag: 03.02.2015
(51) Int. Cl.: G01M 7/02, G01M 13/02

(54) **SCHWINGMASCHINE**
VIBRATION MACHINE
MACHINE DE VIBRATION

(30) Priorität: 07.02.2014 DE 102014001515
(43) Veröffentlichungstag der Anmeldung: 14.12.2016
(73) Patentinhaber: Schenck Process Europe GmbH, 64293 Darmstadt (DE)
(72) Erfinder: SCHÄFER, Jan, 64295 Darmstadt (DE)
(74) Vertreter: Ellspermann, Ina
(86) Internationale Anmeldenummer: PCT/EP2015/000211
(87) Internationale Veröffentlichungsnummer: WO 2015/117750

(56) Entgegenhaltungen:
- EP-A1- 0 326 870
- EP-A2- 1 110 688
- WO-A1-2009/127428
- WO-A1-2011/117718
- DE-A1- 10 349 398
- DE-A1-102011 117 468
- DE-C- 972 488

## Beschreibung

Die vorliegende Erfindung betrifft eine Schwingmaschine gemäß dem Oberbegriff des Patentanspruchs 1.

Üblicherweise sind selbst-verursachte Schwingungen an industriellen Maschinen mit rotierenden Teilen unerwünscht. Daher sind auch in Normen und Vorschriften, beispielsweise in der DIN ISO 10816 Schwingungskennwerte definiert anhand derer sich das Schwingverhalten von Maschinen mit rotierenden Teilen bewerten lässt. Anhand dieser Schwingungskennwerte können Rückschlüsse auf den aktuellen Maschinenzustand geschlossen sowie Prognosen über die restliche Lebensdauer erstellt werden.

Im Gegensatz dazu unterliegen Schwingmaschinen wie Schwingsiebe, Vibrations-Fördervorrichtungen oder Vibrations-Zentrifugen einer fortwährenden und für die Funktionserfüllung notwendigen Schwingbelastung. Sie weisen üblicherweise einen Erreger mit einer oder mehreren Unwuchtmassen oder einen Magneterreger auf, der die Schwingmaschine zu einer Schwingbewegung antreibt. Diese Schwingbewegung wird gezielt in Förderprozessen für Sieb- und Trennvorgänge oder auch für Zerkleinerungsprozesse mit anschließendem oder gleichzeitigem Materialtransport verwendet. Dementsprechend werden derartige Schwingmaschinen häufig oder vorwiegend bei der Verarbeitung und dem Transport von Schüttgütern unterschiedlicher Größe und Zusammensetzung verwendet. Sie unterliegen aufgrund der Dauerschwingbelastung einem hohen Verschleiß. Ein fortschreitender Verschleiß kann dazu führen, dass die Schwingmaschine ein anderes als das gewünschte Schwingverhalten aufweist. Dies kann zum einen die gewünschte Funktionserfüllung der Schwingmaschine beeinträchtigen und zum anderen den Verschleißvorgang beschleunigen, welcher zu einem Totalausfall der Schwingmaschine führt.

Um längere Stillstandszeiten aufgrund von Bauteildefekten zu vermeiden, ist es erstrebenswert, noch vor dem Totalausfall eines Bauteils auf dessen Lebensdauer schließen zu können. Aus dem Stand der Technik ist es daher bekannt, Schwingmaschinen jeder Art mit Vorrichtungen zur Überwachung des Betriebszustandes auszustatten.

Es sind nun unterschiedliche Ansätze zur Zustandsüberwachung einer Schwingmaschine bekannt, welche einzeln oder ergänzend zur Schwingmaschinen-Zustandserfassung eingesetzt werden können.

Ein erster Ansatz ist die Überwachung der Lager und/oder Getriebe, welche typischerweise innerhalb der Erreger verbaut sind und die gewünschte Kraftübertragung ermöglichen. Diese Lager und/oder Getriebe werden typischerweise durch Erfassung des Körperschalls überwacht, welcher typischerweise mittels piezoelektrischer Beschleunigungssensoren gemessen wird. Ein Beispiel für diesen Ansatz bildet die EP 1285175 A1, bei welchem die Lager von unterschiedlichen Sensoren, einem mechanischen und einem piezoelektrischen Sensor, überwacht werden. Die in diesem Ansatz interessierenden Frequenzen der gemessenen Beschleunigungen liegen typischerweise im Bereich von wenigen 100 Hz bis mehreren 1000 Hz und umfassen strukturelle Resonanzfrequenzen der Erreger, welche durch Lager- und/oder Getriebeschäden zum Schwingen angeregt werden.

Ein zweiter Ansatz zur Zustandsüberwachung von Schwingmaschinen ist die Durchführung von Modalanalysen zur Erfassung der Strukturdynamik. Die Kenntnis über die Strukturdynamik ist bei Schwingmaschinen zunächst deshalb wichtig, um sicherzustellen, dass die Betriebsfrequenz außerhalb bestehender Eigenfrequenzen der Schwingmaschine liegt. Weiterhin kann durch wiederholte Modalanalysen und Ergebnis-Vergleiche auf Zustandsänderungen geschlossen werden. Dadurch können die Zustände all derjenigen Bauteile überwacht werden, welche einen Einfluss auf die Strukturdynamik der Schwingmaschine besitzen. Eine Umsetzung zur Überwachung der Strukturdynamik, um Rückschlüsse auf den Maschinenzustand schließen zu können beschreiben die DE102008019578A1 und deren Parallelanmeldung WO2009/127428A1. Hier werden mittels eines Beschleunigungssensors wiederholt Amplituden- bzw. Resonanzspektren erfasst, welche mit einem vorbekannten Amplitudenspektrum abgeglichen werden. Die Differenz zwischen aktuellem und vorbekanntem Spektrum wird als Indikator für einen möglichen Schadensfall herangezogen. Modalanalysen werden stets bei stehender Maschine durchgeführt.

Ein dritter Ansatz zur Zustandsüberwachung von Schwingmaschinen ist die direkte messtechnische Erfassung des Schwingverhaltens im Betrieb. Typischerweise wird das Schwingverhalten von Schwingmaschinen ebenfalls durch Verwendung piezoelektrischer Beschleunigungssensoren erfasst. In Abgrenzung zum oben genannten Ansatz zur Lager- und/oder Getriebeüberwachung, entsprechen die in diesem Ansatz interessierenden Frequenzen der Erregerfrequenz selbst und ggf. Vielfachen der Erregerfrequenz. Die Erregerfrequenz von Schwingmaschinen liegt typischerweise im Bereich weniger Hz bis <30 Hz. Typischerweise werden mehrere piezoelektrische Beschleunigungssensoren derartig an der Schwingmaschine montiert, dass eine mehrdimensionale Überwachung des Schwingverhaltens ermöglicht wird. Wird die Schwingmaschine vereinfachend als Starrkörper betrachtet, gilt der physikalische Grundsatz, dass dieser Körper sechs Freiheitsgrade - drei translatorische und drei rotatorische - besitzt. Die Verwendung piezoelektrischer Beschleunigungssensoren erlaubt somit die direkte Erfassung von drei der sechs möglichen Freiheitsgrade, nämlich der translatorischen. Die fehlenden rotatorischen Bewegungsmuster lassen sich theoretisch indirekt aus der relativen Auswertung räumlich getrennter aber gleichorientierter Beschleunigungssensoren ableiten. Dieser Weg zur Erfassung rotatorischer Bewegungen ist jedoch stets mit Ungenauigkeiten behaftet.

Außerdem sind aus der WO 2011/117718 A1 Inertialsensoren des MEMS Typus bekannt, die Vibrationen in mindestens zwei orthogonal zueinander angeordneten Bewegungsrichtungen messen können und die zur Ermittlung der dynamischen Belastung von Drehgestellen von Eisenbahnwaggons eingesetzt werden.

Weiterhin zeigt die WO 01/50098 A1 Inertialsensoren, die in der Lage sind, Beschleunigungen in drei orthogonal zueinander angeordneten translatorischen Achsen zu erfassen.

Ferner offenbart die DE 10 2007 010 800 A1ein Trägheitsnavigationssystem INS mit drei Beschleunigungs- und drei Drehratensensoren, die die Vibrationen von handgeführten Elektronwerkzeugen erfassen können.

Vor diesem Hintergrund hat sich herausgestellt, dass neben der Ermittlung von Temperaturanstiegen bei Schmierflüssigkeiten oder Schmieröl von Lagerteilen und der Ermittlung ansteigender Vibrationsbelastung in Form von Körperschall, ein von dem normalen Schwingverhalten abweichendes Schwingverhalten auf den nahenden Ausfall spezifischer Bauteile der Schwingmaschine schließen lässt. Weiterhin indiziert ein von dem gewünschten Schwingverhalten abweichendes Schwingverhalten eine eingeschränkte Funktionserfüllung der Schwingmaschine. Es stellt sich daher die Aufgabe, bei Schwingmaschinen Abweichungen im Schwingverhalten zu ermitteln, um Rückschlüsse auf den Betriebszustand ziehen zu können.

Diese Aufgabe wird durch eine Schwingmaschine mit den Merkmalen des Patentanspruchs 1 gelöst. Vorteilhafte Weiterbildungen sind Gegenstand der abhängigen Ansprüche und in der Beschreibung enthalten.

Mit der Erfindung wird eine Schwingmaschine mit einer Vorrichtung zur Zustandsüberwachung bereitgestellt, die einen ersten Schwingkörper umfasst, der elastisch oder federnd gegenüber einem zweiten Schwingkörper oder einem Untergrund gelagert ist. Der erste Schwingkörper kann ein Schwinggehäuse oder ein Schwingrahmen sein, der weitere Komponenten oder Bauteile wie Siebfläche oder Aussteifungen beinhaltet. Dieser erste Schwingkörper ist üblicherweise mittels Stahlfedern elastisch gegenüber dem zweiten Schwingkörper oder dem Untergrund gelagert. Wahlweise kommen jedoch auch Elastomerlager oder sonstige elastische Lager in Betracht. Der zweite Schwingkörper, der als Schwingungstilger dient, kann dabei ein Isolationsrahmen sein, der wiederum selbst elastisch gegenüber dem Untergrund gelagert ist.

Weiterhin umfasst die Schwingmaschine wenigstens einen ersten Erreger, der ein gezieltes Schwingverhalten der Schwingmaschine oder des Schwingkörpers bewirkt. Üblicherweise weist die Schwingmaschine auch einen Motor zum Antrieb des Erregers und eine Antriebsgelenkwelle zur Verbindung des Motors mit dem Erreger auf. Bei den Erregern kann es sich um Richterreger, die die Schwingmaschine in eine Schwingbewegung mit einer gezielten translatorischen Richtung versetzen oder um Kreiserreger handeln, die die Schwingmaschine zu einer kreisförmigen Schwingbewegung antreiben.

Erfindungsgemäß umfasst die Schwingmaschine außerdem eine Vorrichtung zur Zustandsüberwachung.

Die Vorrichtung zur Zustandsüberwachung kann wiederum eine Vorrichtung zur Überwachung des Schwingverhaltens und/oder eine Vorrichtung zur Körperschallmessung und/oder eine Vorrichtung zur Temperaturmessung umfassen.

Die Vorrichtung zur Überwachung des Schwingverhaltens als Teil der Vorrichtung zur Zustandsüberwachung weist wenigstens eine erste mikro-elektro-mechanische Vorrichtung in Form eines Inertialsensors auf, wobei dieser mit wenigstens drei Beschleunigungssensoren und wenigstens drei Drehratensensoren ausgestattet ist.

Während piezoelektrische Beschleunigungssensoren eine durchgehend mechanische Kopplung zwischen Messobjekt und piezoelektrischem Element aufweisen und somit besonders gut zur Aufnahme von Körperschall im hochfrequenten Bereich mehrerer kHz geeignet sind, eignen sich Inertialsensoren also auf Trägheit basierende Drehraten- und Beschleunigungssensoren besonders gut zur Bewegungserfassung im niederfrequenten Bereich von 0 bis einige hundert Hz. Inertialsensoren sind üblicherweise mikroelektromechanische Systeme (MEMS) und werden meist aus Silizium hergestellt.

Diese Sensoren sind Feder-Masse-Systeme, bei denen die Federn nur wenige Mikrometer breite Siliziumstege sind und auch die Masse aus Silizium hergestellt ist. Durch die Auslenkung bei Beschleunigung kann zwischen dem gefedert aufgehängten Teil und einer festen Bezugselektrode eine Änderung der elektrischen Kapazität gemessen werden.

Während die Beschleunigungssensoren, die im Inertialsensor jeweils orthogonal zueinander angeordnet sind, die linearen Beschleunigungen in x- bzw. y- bzw. z-Achse messen, woraus durch zweifache Integration der zurückgelegte Weg der Schwingmaschine errechnet wird, messen die Drehratensensoren die Winkelgeschwindigkeit um die x- bzw. y- bzw. z-Achse, so dass durch einfache Integration die Winkeländerung bestimmt wird. Bei einem Inertialsensor mit drei Beschleunigungssensoren und drei Drehratensensoren spricht man auch von einem sogenannten 6D-MEMS-Sensor. Zur Bestimmung der absoluten Lage des Sensors im Raum können zusätzlich Magnetometer verwendet werden, wobei die Anordnung von drei Magnetometern zur Erfassung von wiederum drei zueinander orthogonal angeordneten Achsen vorteilhaft ist. Bei einer Kombination von drei Beschleunigungssensoren, drei Drehratensensoren und drei Magnetometern wird dementsprechend von einem 9D-MEMS-Sensor gesprochen. Der Inertialsensor kann weiterhin um einen Drucksensor und/oder einen Temperatursensor erweitert sein.

Somit ist ein sechsdimensionaler Inertialsensor, welcher drei translatorische und drei rotatorische Messachsen enthält, ideal zur Erfassung des Schwingverhaltens von Schwingmaschinen und erfasst die Bewegung der als Starrkörper betrachteten Schwingmaschine im Raum vollständig.

Anforderungen an das Schwingverhalten beziehen sich z.B. an die Schwingfrequenz, die Schwingungsamplituden und die Schwingungsform.

Erfindungsgemäß wird bei bekannter Position und Orientierung des sechsdimensionalen Inertialsensors durch angepasste Umrechnungsalgorithmen sämtliche Bewegungen in Form von Beschleunigung, Geschwindigkeit und Weg für jeden Punkt des Starrkörpers berechnet.

Mit der Vorrichtung zur Überwachung des Schwingverhaltens können auf diese Art Schäden an den Federn bzw. der Lager sowie Schäden an den Antriebs- und Zwischengelenkwellen detektiert werden. Weiterhin sind Risse oder Brüche an Seitenwangen, Traversen und Längsreitern feststellbar. Letztlich lassen sich ebenfalls fehlerhafte Beladungen in Form von zu hoher oder asymmetrischer Beladung oder fehlerhafte Siebbelagskomponenten feststellen.

Schäden an den Lagern und Zahnrädern, beispielsweise Ausplatzungen an den Lager-Laufflächen, emittieren Körperschall in Form von Stoßimpulsen. Diese Signale lassen sich durch eine Vorrichtung zur Körperschallmessung in Form eines oder mehrerer piezoelektrischer Beschleunigungssensoren messen. Die piezoelektrischen Beschleunigungssensoren können an anderer Stelle als die Inertialsensoren an der Schwingmaschine vorgesehen sein. Die Messdaten von piezoelektrischen Beschleunigungssensoren lassen sich beispielsweise in die Zustandsgrößen Effektivwert, Crest-Faktor und/oder Kurtosis umrechnen. Weitere Zustandsgrößen sind möglich.

Vorteilhafterweise kann der Inertialsensor zur Überwachung des Schwingverhaltens der Schwingmaschine um einen Datenspeicher und/oder Prozessor erweitert sein. Dementsprechend sind der oder die Inertialsensor/en und/oder der Datenspeicher und/oder der Prozessor auf einer Platine angeordnet. Als Vorrichtung zur Messdatenakquisition dient eine Baugruppe, die mindestens einen Inertialsensor und einen Prozessor umfasst. Die Vorrichtung zur Messdatenakquisition kann zusätzlich eine Vorrichtung zur Körperschallmessung, eine Vorrichtung zur Temperaturmessung, einen Speicher und/oder ein Modul zur Übertragung digitaler Daten beinhalten. Mit dieser können die erforderlichen Messdaten erfasst und an eine Auswertevorrichtung weitergeleitet werden.

Gemäß einer Ausgestaltung der Erfindung kann die Vorrichtung zur Messdatenakquisition als Teil der Vorrichtung zur Zustandsüberwachung einer Schwingmaschine und damit ein erster Inertialsensor direkt an dem Erreger der Schwingmaschine angeordnet sein. Dabei kann er an, in oder auf dem Gehäuse des Erregers befestigt werden. Häufig weisen Schwingmaschinen, vorzugsweise Schwingsiebe wenigstens einen zweiten Erreger auf. Gerade bei Schwingsieben mit großen Massen erzeugt dieser zweite Erreger zusammen mit dem ersten Erreger die erforderliche Schwingbewegung des Schwingkörpers. Um eine gleichwirkende Bewegung zu erzeugen, ist es erforderlich diese Erreger miteinander zu koppeln. Dies geschieht üblicherweise durch eine Verbindung über eine Zwischengelenkwelle. Da auch eine derartige Zwischengelenkwelle einem hohen Verschleiß aufgrund der Schwingungsbeanspruchung unterliegt, sieht die Erfindung vor, dass zur Überwachung der Zwischengelenkwelle ein zweiter Inertialsensor vorgesehen ist. Der zweite Inertialsensor wird vorteilhafterweise ebenfalls direkt auf dem zweiten Erreger befestigt. Die Phasendifferenz der Stoßbeschleunigungen zwischen erstem und zweitem Erreger, gewonnen aus den jeweiligen Messachsen der beiden Inertialsensoren, kann als Kenngröße für den Zustand der Zwischengelenkwelle verwendet werden.

Mit Hilfe des ersten und/oder des zweiten Inertialsensors wird erfindungsgemäß eine Auswertung des Schwingverhaltens der Schwingmaschine z.B. über die Zustandsgrößen Beschleunigungsamplitude, Drehratenamplitude, Vektoränderung des Stoßzeigers, Phasenverschiebung und/oder THD oder Klirrfaktor möglich sein. Weitere Analysealgorithmen sind möglich. Hierzu umfasst die Vorrichtung zur Zustandsüberwachung eine elektronische Auswertevorrichtung. Die elektronische Auswertevorrichtung ist zum Empfang der Messdaten der Vorrichtung zur Messdatenakquisition und zur Auswertung der Messdaten bezüglich der vorgenannten Zustandsgrößen vorgesehen. Mit Hilfe der elektronischen Auswertevorrichtung kann dann eine Vergleichsbetrachtung von berechneten Zustandsgrößen und definierten Grenzwerten erfolgen. Je nach Aufgabenstellung kann dabei eine Auswertung in der Art erfolgen, dass die Zustandsgrößen mit einem definierten Grenzwert, der als Absolutwert in der Auswertevorrichtung hinterlegt wurde, verglichen werden oder dass als definierter Grenzwert ein Initialwert mit einem Toleranzband vorgesehen ist.

Vorteilhafterweise umfasst die elektronische Auswertevorrichtung eine Anzeige zur Darstellung der Zustandsgrößen und/oder eine Warnanzeige oder einen Warnsignalgeber bei Überschreitung definierter Grenzwerte. Damit kann dem Benutzer signalisiert werden, ob sich die Schwingmaschine in den vorgegebenen Grenzwerten bewegt oder ob diese überschritten werden. Um Fehlalarme in Folge von flüchtigen / transienten Signalen zu vermeiden, können Zustandsüberwachungsalgorithmen dahingehend erweitert werden, dass Alarmzustände erst bei mehrmaligem bzw. längerem Auftreten ausgelöst werden.

Eine Ausführungsform der Schwingmaschine mit einer Vorrichtung zur Zustandsüberwachung sieht vor, dass die Vorrichtung zwei getrennt voneinander angeordnete Module umfasst. In diesem Fall kann die Vorrichtung zur Messdatenakquisition als erstes Modul direkt an der Schwingmaschine oder dem Erreger befestigt werden und die Auswertevorrichtung als zweites Modul räumlich getrennt vom ersten Modul oder auch räumlich getrennt von der Schwingmaschine angeordnet sein. Bei getrennter Anordnung von Vorrichtung zur Messdatenakquisition und der Auswertevorrichtung stellt das Kommunikationskabel wiederum ein Bauteil dar, das aufgrund der Dauerschwingbelastung durch die Siebmaschine einem erhöhten Verschleiß unterliegt. Zur Vermeidung von Systemausfällen durch Kabelbruch sieht die Erfindung dementsprechend eine kabellose Verbindung zwischen der Auswertevorrichtung und der Vorrichtung zur Messdatenakquisition vor.

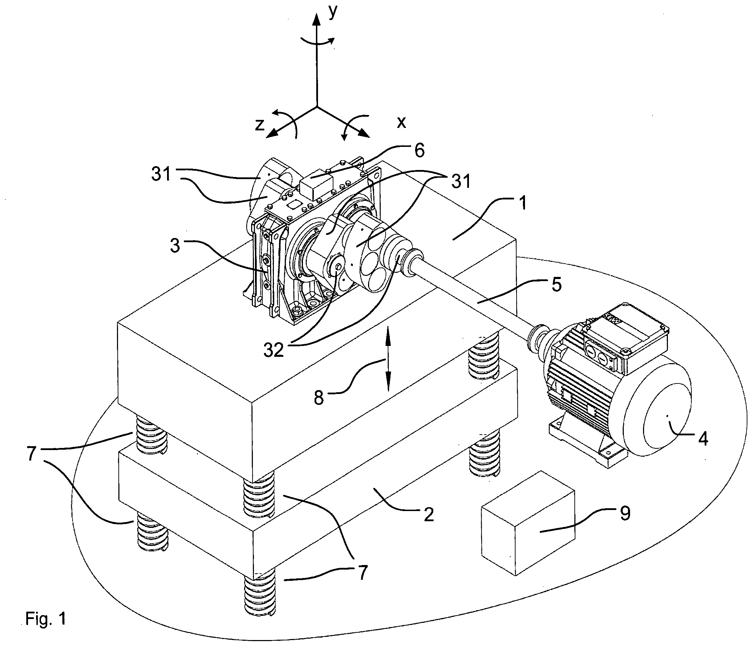

Die Erfindung wird nachfolgend anhand eines Ausführungsbeispiels näher erläutert. Gleichwirkende Elemente sind dabei in der Figur mit denselben Bezugszeichen gekennzeichnet. Im Einzelnen zeigt dabei
Fig. 1 eine Schwingmaschine in schematischer räumlicher Darstellung.

Fig. 1 zeigt eine Schwingmaschine mit einem ersten Schwingkörper 1 und einem zweiten Schwingkörper 2, die jeweils federnd gelagert sind. Dabei ist der Schwingkörper 1, der beispielsweise ein Rahmen eines Schwingsiebs inklusive Siebfläche sein kann, über Federn 7 gegenüber dem Schwingkörper 2 gelagert. Der Schwingkörper 2, der beispielsweise ein Isolationsrahmen sein kann, ist ebenfalls federnd gegenüber dem festen Untergrund oder Boden gelagert. Der Schwingkörper 2 kann in einem solchen Fall als Schwingungstilger oder Schwingungsdämpfer bezeichnet werden. Die Aufgabe eines solchen Schwingungstilgers oder Schwingungsdämpfers besteht darin, Schwingungen, die zu Schäden am Untergrund oder an dem mit dem Untergrund verbundenen Gebäude führen können, zu eliminieren. Beide Schwingkörper 1 und 2 werden im vorliegenden Ausführungsbeispiel vom einem Erreger 3 in eine lineare Schwingbewegung versetzt, wobei diese Schwingbewegung in einer durch den Doppelpfeil 8 gekennzeichnete vorgegebene Richtung erfolgt, der Stoßrichtung des Erregers. Der Erreger 3, ein sogenannter Richterreger, ist dabei mittig auf dem ersten Schwingkörper 1 befestigt und besitzt Unwuchtmassen 31, deren Schwerpunkte exzentrisch zur Drehachse 32 angeordnet sind.

Der Erreger 3 wird wiederum von einem Motor 4 angetrieben, der über eine Antriebswelle 5 mit dem Erreger 3 verbunden ist.

Auch wenn die durch den Erreger 3 verursachte Schwingbewegung der Schwingmaschine nur in einer Richtung aufgegeben wird, führt die Schwingmaschine aufgrund ihrer sechs Freiheitsgrade lineare Bewegungen in drei voneinander unabhängigen Richtungen x, y und z und rotatorische Bewegungen um die Achsen x, y, und z aus. Zur vollständigen Bewegungserfassung des Schwingkörpers 1 im Raum ist bei diesem Ausführungsbeispiel eine Vorrichtung zur Messdatenakquisition 6 als Teil einer Vorrichtung zur Zustandsüberwachung der Schwingmaschine auf dem Gehäusedeckel des Erregers 3 befestigt. Alternativ kann diese auch an einer anderen beliebigen Stelle der Schwingmaschine angeordnet werden. Diese Vorrichtung zur Messdatenakquisition 6 beinhaltet mindestens einen Inertialsensor und einen Prozessor. Bei dem Inertialsensor handelt es sich um einen 6D-MEMS-Sensor, der drei Beschleunigungssensoren und drei Drehratensensoren umfasst. Alternativ könnte ein Inertialsensor in Form eines 9D-MEMS-Sensor zum Einsatz kommen, der neben den drei Beschleunigungs- und Drehratensensoren noch 3 Magnetometer umfasst.

Die von der Vorrichtung zur Messdatenakquisition 6 mittels Inertialsensor aufgenommenen Messdaten werden bei der vorliegenden Ausführungsform kabellos an eine Auswertevorrichtung 9 gesendet, wo die übermittelten Daten zur Zustandsüberwachung der Schwingmaschine in Form von Zustandsgrößen wie Beschleunigungsamplitude, Drehratenamplitude, Vektoränderung des Stoßzeigers, Phasenverschiebung und/oder THD oder Klirrfaktor weiterverarbeitet werden.

Die Auswertevorrichtung 9 umfasst neben einem Datenspeicher eine Recheneinheit zur Verarbeitung der durch den Inertialsensor erfassten Messdaten sowie eine Anzeigeeinheit in Form eines Bildschirms. Zur Zustandsüberwachung kann die Anzeigeeinheit sowohl als Warnsignalgeber als auch als zur Darstellung des IST-Zustandes der Schwingmaschine genutzt werden. Weiterhin umfasst die Auswertevorrichtung 9 serielle Kommunikationsschnittstellen sowie Schaltausgänge, die im Alarmzustand geschaltet werden.

Die Auswertung des IST-Zustands in Form aktueller Zustandsgrößen im Vergleich mit vorgegebenen Grenzwerten erlaubt dem Nutzer eine Prognose über die Lebenserwartung der überwachten Bauteile, Komponenten oder Schwingmaschine insgesamt. Weiterhin determinieren Zustandsgrößen innerhalb der gegebenen Grenzwerte eine Wunschgemäße Funktionserfüllung der Schwingmaschine.

### Bezugszeichenliste

- 1: Schwingkörper
- 2: Schwingkörper
- 3: Erreger
- 31: Unwuchtmasse
- 32: Drehachse
- 4: Motor
- 5: Antriebswelle
- 6: Vorrichtung zur Messdatenakquisition
- 7: Feder
- 8: Stoßrichtung des Erregers
- 9: Auswertevorrichtung
- x, y, z: Bewegungs- und Rotationsachsen

## Patentansprüche

1. Schwingmaschine mit einer Vorrichtung zur Zustandsüberwachung umfassend
- einen ersten Schwingkörper (1), der elastisch gegenüber einem zweiten Schwingungskörper (2) oder einem Untergrund gelagert ist,
- einen ersten Erreger (3), der ein gezieltes Schwingverhalten der Schwingmaschine oder des Schwingkörpers (1) bewirkt,
**dadurch gekennzeichnet, dass**
- die Vorrichtung zur Zustandsüberwachung
- - wenigstens eine erste mikro-elektro-mechanische Vorrichtung in Form eines Inertialsensors mit wenigstens drei Beschleunigungssensoren und wenigstens drei Drehratensensoren, einen sogenannten 6D-MEMS-Sensor aufweist, der vorgesehen ist, das Schwingverhalten und die Bewegung der als Starrkörper betrachteten Schwingmaschine im Raum zu erfassen, wobei
- - - die Beschleunigungssensoren, die im Inertialsensor jeweils orthogonal zueinander angeordnet sind, die linearen Beschleunigungen in x- bzw. y- bzw. z-Achse messen,
- - - und die Drehratensensoren die Winkelgeschwindigkeit um die x- bzw. y- bzw. z-Achse messen,
- - und die Vorrichtung zur Zustandsüberwachung eine elektronische Auswertevorrichtung (9) aufweist,
- - - mit der bei bekannter Position und Orientierung des Inertialsensors durch angepasste Umrechnungsalgorithmen sämtliche Bewegungen in Form von Beschleunigung, Geschwindigkeit und Weg für jeden Punkt des Starrkörpers berechnet werden, wobei durch zweifache Integration der linearen Beschleunigungen der zurückgelegte Weg der Schwingmaschine und durch einfache Integration der Winkelgeschwindigkeit die Winkeländerung bestimmt wird.

2. Schwingmaschine gemäß Anspruch 1, **dadurch gekennzeichnet, dass** der Inertialsensor um einen Datenspeicher und/oder Prozessor erweitert ist.

3. Schwingmaschine gemäß einem der vorhergehenden Ansprüche, **dadurch gekennzeichnet, dass** wenigstens ein zweiter Erreger vorgesehen ist, der über eine Zwischengelenkwelle mit dem ersten Erreger (3) verbunden ist.

4. Schwingmaschine gemäß einem der vorhergehenden Ansprüche, **dadurch gekennzeichnet, dass** der Inertialsensor an, in oder auf einem Gehäuse wenigstens eines Erregers (3) vorgesehen ist.

5. Schwingmaschine gemäß einem der vorhergehenden Ansprüche, **dadurch gekennzeichnet, dass** die Vorrichtung zur Zustandsüberwachung zur Auswertung des Schwingverhaltens der Schwingmaschine bezüglich der Zustandsgrößen Beschleunigungsamplitude, Drehratenamplitude, Vektoränderung des Stoßzeigers, Phasenverschiebung und/oder THD- oder Klirrfaktor im Einzelnen oder in Kombination miteinander vorgesehen ist.

6. Schwingmaschine gemäß einem der vorhergehenden Ansprüche, **dadurch gekennzeichnet, dass** die elektronische Auswertevorrichtung (9) zum Empfang der Messdaten des Inertialsensors oder der Inertialsensoren und zur Auswertung der Messdaten bezüglich der Zustandsgrößen Beschleunigungsamplitude, Drehratenamplitude, Vektoränderung des Stoßzeigers, Phasenverschiebung und/oder THD- oder Klirrfaktor im Einzelnen oder in Kombination miteinander vorgesehen ist.

7. Schwingmaschine gemäß dem vorhergehenden Anspruch, **dadurch gekennzeichnet, dass** die elektronische Auswertevorrichtung (9) zur Vergleichsbetrachtung von ermittelten Zustandsgrößen und definierten Grenzwerten vorgesehen ist.

8. Schwingmaschine gemäß dem vorhergehenden Anspruch, **dadurch gekennzeichnet, dass** als definierter Grenzwert ein Absolutwert vorgesehen ist.

9. Schwingmaschine gemäß Anspruch 7, **dadurch gekennzeichnet, dass** als definierter Grenzwert ein Initialwert mit Toleranzband vorgesehen ist.

10. Schwingmaschine gemäß einem der vorhergehenden Ansprüche, **dadurch gekennzeichnet, dass** die elektronische Auswertevorrichtung (9) eine Anzeige zur Darstellung der Zustandsgrößen und/oder eine Warnanzeige oder einen Warnsignalgeber bei Überschreitung definierter Grenzwerte umfasst.

11. Schwingmaschine gemäß einem der vorhergehenden Ansprüche, **dadurch gekennzeichnet, dass** die elektronische Auswertevorrichtung (9) der Vorrichtung zur Zustandsüberwachung der Schwingmaschine und eine Vorrichtung zur Messdatenakquisition (6) räumlich voneinander getrennt vorgesehen sind.

12. Schwingmaschine gemäß einem der vorhergehenden Ansprüche, **dadurch gekennzeichnet, dass** die Verbindung zwischen elektronischer Auswertevorrichtung (9) und Vorrichtung zur Messdatenakquisition (6) kabellos vorgesehen ist.

## Claims

1. Vibrating machine having a condition-monitoring device comprising
- a first vibrating body (1) that is elastically supported with respect to a second vibrating body (2) or to a base,
- a first exciter (3) that produces an intentional vibration behavior of the vibrating machine or vibrating body (1),
**characterized in that**
- the condition-monitoring device has
- at least one first microelectromechanical device in the form of an inertial sensor having at least three acceleration sensors and at least three rotation rate sensors, a so-called 6D MEMS sensor that is provided for sensing the vibration behavior and the motion in space of the vibrating machine, which is considered as a rigid body, wherein
-- the acceleration sensors, which are each arranged orthogonally to one another in the inertial sensor, measure the linear accelerations in the X, Y, or Z axes,
-- and the rotation rate sensors measure the angular velocity about the X, Y, or Z axes,
-- and the condition-monitoring device has an electronic analysis device (9),
--- with which all motions can be calculated in the form of acceleration, speed, and distance for every point of the rigid body, for a known position and orientation of the inertial sensor, using customized conversion algorithms, wherein the distance that has been traveled by the vibrating machine is determined by double integration of the linear accelerations, and the change in angle is determined by single integration of the angular velocity.

2. Vibrating machine according to claim 1, **characterized in that** the inertial sensor is augmented by a data memory and/or processor.

3. Vibrating machine according to one of the preceding claims, **characterized in that** at least one second exciter is provided, which is connected to the first exciter (3) by an intermediate universal joint shaft.

4. Vibrating machine according to one of the preceding claims, **characterized In that** the inertial sensor is provided at, in, or on a housing of at least one exciter (3).

5. Vibrating machine according to one of the preceding claims, **characterized in that** the condition-monitoring device is provided for analyzing the vibration behavior of the vibrating machine with regard to the state variables of acceleration amplitude, rotation rate amplitude, vector change of the impact vector, phase shift, and/or THD or distortion factor, individually or in combination with one another.

6. Vibrating machine according to one of the preceding claims, **characterized in that** the electronic analysis device (9) is provided for receiving the measured data of the inertial sensor or the inertial sensors and for analyzing the measured data with regard to the state variables of acceleration amplitude, rotation rate amplitude, vector change of the impact vector, phase shift, and/or THD or distortion factor, individually or in combination with one another.

7. Vibrating machine according to the preceding claim, **characterized in that** the electronic analysis device (9) is provided for comparative examination of the state variables determined and the defined limit values.

8. Vibrating machine according to the preceding claim, **characterized in that** an absolute value is provided as the defined limit value.

9. Vibrating machine according to claim 7, **characterized in that** an initial value with a tolerance band is provided as the defined limit value.

10. Vibrating machine according to one of the preceding claims, **characterized in that** the electronic analysis device (9) includes an indicator to display the state variables and/or a warning indicator or a warning signal generator for the case when defined limit values are exceeded.

11. Vibrating machine according to one of the preceding claims, **characterized in that** the electronic analysis device (9) of the condition-monitoring device of the vibrating machine and a device for measured data acquisition (6) are provided so as to be spatially separated from one another.

12. Vibrating machine according to one of the preceding claims, **characterized in that** the connection between the electronic analysis device (9) and the device for measured data acquisition (6) is wireless.

## Revendications

1. Machine vibrante avec un dispositif de surveillance d'état comprenant un premier corps vibrant (1), qui est logé de manière élastique par rapport à un deuxième corps vibrant (2) ou à un sol,
un premier excitateur (3), qui provoque un comportement vibrant ciblé de la machine vibrante ou du corps vibrant (1),
**caractérisée en ce que**
le dispositif de surveillance d'état
comprend au moins un premier dispositif micro-électro-mécanique sous la forme d'un capteur inertiel avec au moins trois capteurs d'accélération et au moins trois capteurs de vitesse de rotation, ce qu'on appelle un capteur 6D-MEMS, qui est prévu pour mesurer le comportement vibrant et le mouvement de la machine vibrante, considérée comme un corps rigide, dans l'espace,
les capteurs d'accélération, qui sont disposés dans le capteur inertie de manière orthogonale entre eux, qui mesurent les accélérations linéaires dans l'axe x, y ou z, et les capteurs de vitesse de rotation qui mesurent une vitesse angulaire autour de l'axe x, y ou z,
et le dispositif de surveillance d'état comprend un dispositif d'analyse électronique (9), avec lequel, lorsque la position et l'orientation du capteur inertiel sont connues, à l'aide d'algorithmes de conversion adaptés, tous les mouvements sont calculés pour tout point du corps rigide sous la forme d'une accélération, d'une vitesse et d'une trajectoire, moyennant quoi, par double intégration des accélérations linéaires, la trajectoire parcourue par la machine vibrante est déterminée et par une intégration simple de la vitesse angulaire, la variation angulaire est déterminée.

2. Machine vibrante selon la revendication 1, **caractérisée en ce que** le capteur inertiel est complété par une mémoire de données et/ou par un processeur.

3. Machine vibrante selon l'une des revendications précédentes, **caractérisée en ce qu'**au moins un deuxième excitateur est prévu, qui est relié avec le premier excitateur (3) par l'intermédiaire d'un arbre articulé intermédiaire.

4. Machine vibrante selon l'une des revendications précédentes, **caractérisée en ce que** le capteur inertiel est prévu au niveau, dans ou sur un boîtier d'au moins un excitateur (3).

5. Machine vibrante selon l'une des revendications précédentes, **caractérisée en ce que** le dispositif de surveillance d'état est prévu pour l'analyse du comportement vibrant de la machine vibrante en ce qui concerne les grandeurs d'état : amplitude d'accélération, amplitude de vitesse de rotation, variation du vecteur de l'indicateur de choc, le décalage de phase et/ou le facteur THD ou la distorsion harmonique, séparément ou combinées entre elles.

6. Machine vibrante selon l'une des revendications précédentes, **caractérisée en ce que** le dispositif d'analyse électronique (9) est prévu pour la réception des données de mesure du capteur inertiel ou des capteurs inertiels et pour l'analyse des données de mesure concernant les grandeurs d'état : amplitude d'accélération, amplitude de vitesse de rotation, variation du vecteur de l'indicateur de choc, le décalage de phase et/ou le facteur THD ou la distorsion harmonique, séparément ou combinées entre elles.

7. Machine vibrante selon la revendication précédente, **caractérisée en ce que** le dispositif d'analyse électronique (9) est prévu pour la comparaison de grandeurs d'état déterminées et de valeurs limites définies.

8. Machine vibrante selon la revendication précédente, **caractérisée en ce que**, en tant que valeur limite définie, une valeur absolue est prévue.

9. Machine vibrante selon la revendication 7, **caractérisée en ce que**, en tant que valeur limite définie, une valeur initiale avec plage de tolérance est prévue.

10. Machine vibrante selon l'une des revendications précédentes, **caractérisée en ce que** le dispositif d'analyse électronique (9) comprend un affichage pour al représentation des grandeurs d'état et/ou un affichage d'avertissement ou un générateur de signaux d'avertissement lors du dépassement de valeurs limites définies.

11. Machine vibrante selon l'une des revendications précédentes, **caractérisée en ce que** le dispositif d'analyse électronique (9) de la surveillance d'état de la machine vibrante et un dispositif d'acquisition de données (6) sont séparés physiquement entre eux.

12. Machine vibrante selon l'une des revendications précédentes, **caractérisée en ce que** la liaison entre le dispositif d'analyse électronique (9) et le dispositif d'acquisition de données (6) est prévue sans câbles.
